# EUROPEAN PATENT SPECIFICATION

(11) **EP 0 589 175 B1**
(45) Date of publication and mention of the grant of the patent: **17.01.1996**
(21) Application number: 93111902.8
(22) Date of filing: 26.07.1993
(51) Int. Cl.: B25B 11/00

(54) **Device for fixing and maintaining shapeable glass plates in position during their machining**
Vorrichtung zum Spannen und Festhalten von zu formenden Glasscheiben in ihrer Position während ihrer Bearbeitung
Dispositif pour fixer et tenir des plaques en verre formables en position pendant leur traitement

(30) Priority: 21.09.1992 IT MI922168
(43) Date of publication of application: 30.03.1994
(73) Proprietor: Bovone, Luigi, I-15070 Belforte Monferrato (Alessandria) (IT)
(72) Inventor: Bovone, Luigi, I-15070 Belforte Monferrato (Alessandria) (IT)
(74) Representative: Luksch, Giorgio, Dr.-Ing.

(56) References cited:
- EP-A- 0 175 295
- EP-A- 0 179 957
- BE-A- 902 515
- FR-A- 1 286 567
- GB-A- 2 205 258

## Description

This invention relates to a device for fixing and maintaining a shapeable glass plate in position during its machining, said plate being placed on a support surface and preferably maintained spaced therefrom to allow a usual operating tool to move and operate thereon, for example during a chamfering process, the device being of the type recited in the preamble of the attached main claim.

During the machining of a glass plate, for example during the chamfering of such a plate, it is necessary to maintain the plate fixed to the support surface to allow said machining to be carried out uniformly along the entire perimetral edge of the glass.

It is known to use sucker devices to fix the plate to the support surface. These devices generally comprise a plurality of suckers connected together in series or parallel by usual hoses. The plate is fixed to the support surface by drawing air from the suckers through these hoses, as required.

This method has however various drawbacks. In particular, if the shape of the plate to be machined is very complex and non-geometrical, a very large number of suckers have to be used to achieve this fixing to the support surface. This means that the feed circuits become very complicated, with a large number of connection hoses between the suckers, these hoses often hindering the movement of the operating tool which machines the plate. Because of the large number of suckers their installation between the plate and support surface requires a considerable time, hence negatively affecting the cost of the process to which the glass plate is subjected.

Moreover, if the shape of the plate is particularly complex and far removed from usual geometrical shapes, the known devices are unable to adequately retain the plate at its edges, ie they are unable to faithfully follow its contour. The result is imperfect machining of the glass, for example with regard to the inclination of the chamfer and to the chamfering path.

EP-A1-0 175 295 discloses a fixing device corresponding to the preamble of claim 1. The known device includes a series of vacuum elements having (as seen from the top) a regular polygonal preferably hexagonal form. Each element has an open undersurface to apply vacuum to a workbench and a suction hole in its flat top surface to apply vacuum to the workpiece and coupling holes in each side surface. The elements are joined together by bushes fitted in the coupling holes. The coupling holes of the outer elements of the device are sealed by plugs except for one connectable with a vacuum source. The device is intended to be placed on a bench surface and the workpiece on the device. By using the appropriate number of elements the device can be made to suit the size of the workpiece. Although mention is made of the use of fitting means including hinges, the disclosure fails to teach or even suggest how and where such hinges have to be applied. The known device is also a plate-like rigid member and its suitability to the size of the workpiece is not the result of a deformation but the addition or subtraction of elements.

FR-A-1 286 567 discloses a machine for grinding glass-sheet edges comprising: a vertical rod supporting a plurality of suction cups upwardly headed and distributed on one and the same horizontal plane. The glass sheet to be worked rests on and is supported by said suction cups. The mutual location of the suction cups can be modified to a certain extent. The connection between suction cups is provided by flexible tubes.

An object of the present invention is to provide a device which enables a glass plate associated with a support surface to be retained reliably and stably during its machining so that this can be performed under optimum conditions.

A particular object of the invention is to provide a device which provides stable and reliable fixing between the plate and support surface independently of the shape of the plate and without using a large number of sucker members.

A further object is to provide a device which acts on the plate in proximity to its peripheral edge so allowing optimum machining to be performed, for example with regard to the inclination of the chamfer and to the chamfering path.

A further object is to provide a device which is very versatile in use and enables the plate to be fixed to the support surface within a short time.

These and further objects, as will be apparent to the expert in the art, are attained by a device having the features of claim 1.

The present invention will be more apparent from the accompanying drawing, which is provided by way of example and in which:
Figure 1 is a perspective view of a device according to the invention during its application for fixing a glass plate to a support surface;
Figure 2 is an enlarged perspective view of part of the device of Figure 1;
Figure 3 is a cross-section through a different embodiment of the device of Figure 1.

With reference to said figures, a glass plate 1 to be machined, for example chamfered, is placed on a support or working surface 2. The plate 1 is fixed to this latter by the device of the invention.

This device comprises a plurality of elements 3 hinged together to form a chain to be arranged as close as possible (consistent with the requirements of the machining process to which the plate is subjected) to the plate edge 5. Specifically, this chain comprises a head element 3A and a tail element 3B to which the said elements 3 are connected, each of said elements (3, 3A, 3B) comprising a body 8 with two opposing faces 9 and 10 at which suckers 11 are provided to cooperate with the surface 2 and plate 1 respectively.

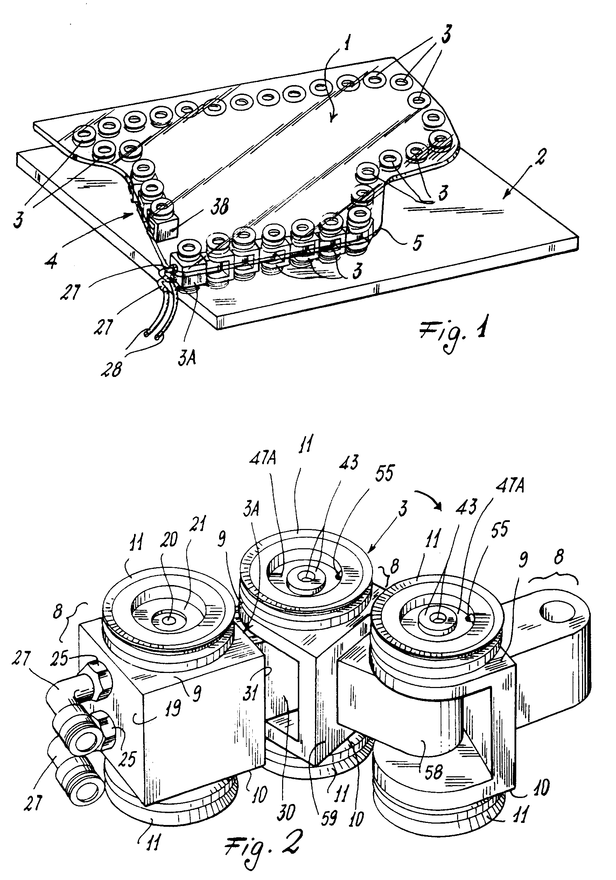

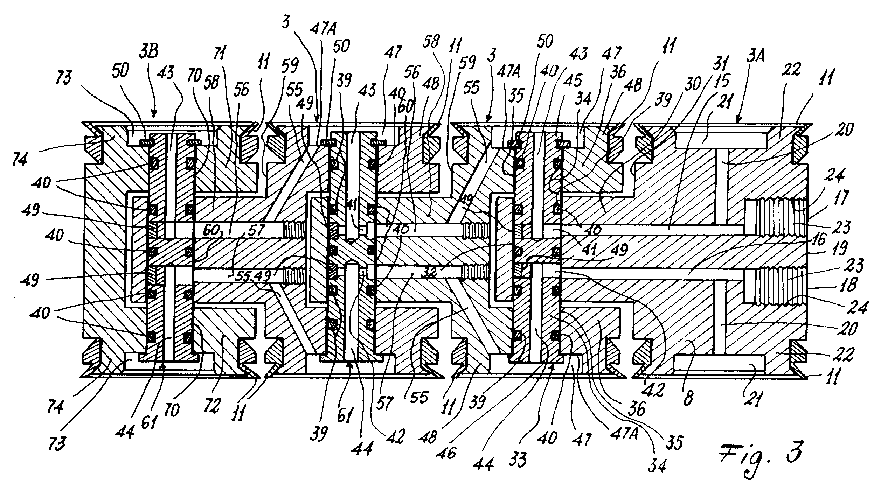

More specifically (see Figure 2 which shows a portion of the chain 4 of Figure 1, and Figure 3 which shows a chain 4 of smaller dimensions that that shown in Figure 1) the head element 3A comprises channels 15 and 16 opening at 17 and 18 into a face 19 which connects together said faces 9 and 10; each channel 15 and 16 is connected to a duct 20 opening into a recess 21 provided in a portion 22 about which a sucker 11 is positioned. At each opening 17 or 18 of each channel 15 and 16 there is provided within the body 8 of the element 3A a cavity 23 of enlarged cross-section and preferably with its wall 24 threaded, with which there can cooperate a corresponding known threaded insert 25 (see Figure 2) connected to a respective pipe 27 (or pneumatic connection member) to be connected in any known manner to a usual hose 28 (see Figure 1) connected to a known vacuum generator (not shown).

The body 8 of the element 3A under examination comprises a projection 30 extending from that face 31 opposite said face 19. In this projection there is a through hole 32 housing a pin 33 which projects from said hole at its opposing ends 34. These ends are inserted into coaxial holes 35 provided in parallel opposing arms 36 of the body of an element 3, this element being hence associated with the head element 3A via the pin 33.

The channels 15 and 16 of this latter element 3A reach the hole 32, so connecting it to said openings 17 and 18 and consequently to the hoses 28 connected to the vacuum generator.

As stated, the pin 33 constrains the element 3A to the element 3, which is hence hinged to the former about said pin. The outer lateral surface of this latter comprises a plurality of annular grooves 39 containing seal elements 40, for example O-rings. The pin 33 internally comprises first ducts 41 and 42 arranged to cooperate with the channels 15 and 16 respectively and positioned axially to them, and second ducts 43 and 44 which are perpendicular to the first ducts 41 and 42 and extend from them to open at opposite ends 45 and 46 of the pin 33; these second ducts each open into a recess 47 provided in a portion 48 of the face 9 and 10 of the element 3 about which a corresponding sucker 11 is positioned.

The first ducts 41 and 42 are closed at one end by usual plugs 49.

The pin 33 is secured to the element 3 by at least one known locking member 50 (such as a split ring) inserted into an annular groove provided in a pin portion lying within said recess 47.

From the base 47A of each recess 47 there extends a duct 55 terminating in a corresponding channel 56, 57 provided in a portion 58 extending from that face 59 of the body 8 of the element 3 which connects together the faces 9 and 10 of said body. In this portion there is provided a through hole 60 carrying a pin 61 identical to said pin 33 and hence not further described. In a manner identical to that already described, by means of this pin a further element 3 identical to the already described element 3 is connected to this latter. In this manner a plurality of elements 3 are associated with each other to form the said chain 4.

At the termination of the chain or chain portion 4 (as shown in Figure 3), the element 3 is connected to the tail element 3B by means of a pin (again indicated by 61 in Figure 3) identical to the described pin 33. The opposing ends 34 of this pin are inserted into through holes 70 provided in parallel overlying arms 71 and 72 of the body 8 of the element 3B, the pin being secured to this latter by rings 50 as already described.

Specifically, the element 3B comprises a substantially C-shaped body without internal channels. In this respect, the ducts 43 and 44 of the pin 61 connect recesses 73, provided in portions 74 about which the suckers 11 are positioned, to the ducts 56 and 57 of the element 3 with which the element 3B is associated. In this manner the suckers 11 of the tail element are able to operate on the plate 1 and on the surface 2 in the same manner as the suckers of every other component of the chain 4.

It will now be assumed that a glass plate 1 is to be fixed to the surface 2 to enable it to be machined, for example chamfered.

To achieve this the chain 4 of elements 3, 3A and 3B is firstly arranged on tile surface 2 below the plate 1, positioning the elements as close as possible to the edge 5 of said plate, for example to prevent any bending forces arising on the plate while a usual chamfering tool is operating on it.

Having done this and connected the hoses 28 to the vacuum generator, air is drawn from the channels 15 and 16 of the head element 3A, hence causing all the suckers 11 of the chain 4 to adhere to the plate 1 and surface 2, so fixing these latter together.

More specifically, analyzing the adhesion of the suckers 11 to the plate 1 (the suckers 11 adhere to the surface 2 in an identical manner), the vacuum generator draws air from the channel 15 and duct 20 of the body 8 of the element 3A. Likewise, air is drawn from the first duct 14 and second duct 43 of the pin 33 of the (intermediate) element 3 associated with the head element 3A; in this manner air is drawn from the recess 47 of the portion 48 of this element about which the sucker 11 is positioned to cooperate with the plate 1. This sucker adheres to the glass. The same occurs in every other element 3 of the chain.

With reference to Figure 3, the sequence in which air is drawn from the suckers of the elements 3 and 3B connected to the aforesaid element 3 is as follows: because of the connection between the recess 73 of the tail element 3B and the recess 47 of the element connected to the head element 3A via the duct 55, the channel 56 of this element 3, the ducts 41 and 43 of the pin 61 connecting together the two similar elements 3, the channels and ducts 55 and 56 of the element associated with the tail element 3B and the ducts of the pin 61 which connect the elements 3 and 3B together, the air present in the recess 73 of this latter passes through the pin 61 connecting the elements 3B and 3 together, and through the elements 3, to be then drawn through the hose 28 connected to the head element 3A. In this manner vacuum is applied to each sucker cooperating with the plate 1 and likewise to the suckers cooperating with the surface 2. Hence the plate and surface are fixed together but spaced apart by an extent sufficient to allow the chamfering tool to operate without problems.

The parts are released by allowing air to penetrate into said ducts and channels in known manner.

The chain 4 can be made of the required size by varying the number of elements 3 connected between the head and tail elements. A plate 1 can obviously be fixed to the surface 2 by using a plurality of pairs of elements 3A and 3B alone, connected to one or more vacuum generators.

One embodiment of the invention has been described. Other embodiments are possible which fall within the scope of the appended claims.

## Claims

1. A device for fixing and maintaining a shapeable glass plate in position during its machining, said plate being placed on a support surface and preferably maintained spaced therefrom to allow an operating tool to move and act thereon, for example during a chamfering process, and comprising a plurality of suckers (11) associated with at least two mutually connected support elements (3, 3A, 3B) interposed between the plate (1) and the support surface (2), said suckers (11) being associated with opposing faces (9, 10) of each element (3, 3A, 3B) so as to cooperate with the plate (1) and surface (2) respectively and comprising air passage conduits (15, 16, 20, 55, 56) which, by drawing said air from one element to another consecutive adjacent element by suction applied to an opening (17, 18) at which at least one of said conduits opens to the outside of one of said elements (3, 3A, 3B), removes air from all the suckers (11) to constrain them to the plate (1) and support surface (2), so fixing these latter together, characterized in that said elements (3, 3A, 3B) are consecutively constrained directly to each other but movable relative to each other so to form a chain-like flexible structure.

2. A device as claimed in claim 1, characterized by comprising means (33, 61) for mechanically and pneumatically connecting adjacently consecutive elements (3, 3A, 3B) together.

3. A device as claimed in claim 1, characterized by comprising at least one head element (3A) provided with channels (15, 16) opening (at 17, 18) into one face (19) of the body (8) of said element, said face connecting together the faces (9, 10) with which the suckers (11) are associated, said channels (15, 16) being connected, via respective ducts (20), to the suckers (11) and to the means (33) for connecting to the consecutive adjacent element, said head element (3A) being connected at least to a usual vacuum generator.

4. A device as claimed in claim 1, characterized by comprising a tail element (3B) with a substantially C-shaped body (8) comprising overlying parallel arms (71, 72) in which coaxial through holes (70) are provided to open into the opposing faces (9, 10) in correspondence with the suckers (11) present thereat.

5. A device as claimed in the preceding claims, characterised in that the element preceding the tail element (3B) comprises a body (8) provided with a projecting part (58) to be inserted between the parallel arms (71, 72) of the tail element (3B), said projecting part (58) comprising a through hole (60) to be positioned coaxial to the holes (70) provided in said arms so as to define a seat for the mechanical and pneumatic connection means (33, 61).

6. A device as claimed in claim 2, characterised in that the mechanical and pneumatic connection means (33, 61) between the adjacent consecutive elements (3, 3A, 3B) comprise at least one body provided with ducts (41, 43) arranged to connect the conduits (15, 16; 56, 57) of the preceding element to the suckers (11) of the next element.

7. A device as claimed in claim 6, characterised in that the connection means (33, 61) have an outer lateral surface comprising a plurality of annular recesses (39) housing seal elements (40).

8. A device as claimed in claim 6, characterised in that the connection means (33, 61) comprise first ducts (41, 42) and second ducts (43, 44) arranged at an angle to each other, the second ducts being able to be operationally connected to the suckers (11) of the next element and the first ducts opening into the outer lateral surface of said means and able to cooperate with the conduits (15, 16; 56, 57) of the preceding element.

9. A device as claimed in claim 3, characterised in that the head element (3A) comprises a projecting portion (30) to be inserted between the arms (36) of the adjacent consecutive element, said portion comprising a through hole to receive the connection means (33).

10. A device as claimed in claim 3, characterised in that with the openings (17, 18) of the channels (15, 16) of the head element (3A) there are associated members (27) for connecting said element to usual hoses connected to the vacuum generator.

11. A device as claimed in claims 1, 3 and 4, characterised in that between the head element (3A) and the tail element (3B) there is at least one intermediate element (3) provided with overlying parallel arms (36) receiving the projection (30) of the head element (3A), and with a projecting portion (58) to be received between the overlying parallel arms (71, 72) of the tail element, said arms (36) and projecting portion (58) of the intermediate element (3) comprising through holes (35, 66) to receive the mechanical and pneumatic connection means (33, 61), the holes (35) present in said arms (36) opening in correspondence with the suckers (11) on the opposing faces (9, 10) of the body (8) of said intermediate element.

12. A device as claimed in claim 11, characterised in that within the intermediate element there are provided ducts (56, 57) connected via channels (55) to the suckers (11) and opening into the through hole (60) provided in the projecting part (58) of said element.

13. A device as claimed in claims 1 and 11, characterised by comprising a plurality of intermediate elements (3) arranged consecutively in succession between the head element (3A) and the tail element (3B), and associated with each other by the mechanical and pneumatic connection means (33, 60), said elements (3, 3A, 3B) defining a chain (4).

14. A device as claimed in claim 1 or 13, characterised in that each element (3, 3A, 3B) of the succession of elements is hinged to the next element by the mechanical and pneumatic connection means.

## Patentansprüche

1. Vorrichtung zum Spannen und Festhalten einer zu formenden Glasscheibe in ihrer Position während ihrer Bearbeitung, wobei die Scheibe auf einer Trägeroberfläche plaziert und vorzugsweise in Abstand davon gehalten wird, um einem Bearbeitungswerkzeug zu ermöglichen, sich zu bewegen und darauf einzuwirken, z.B. während eines Fasungsvorgangs, und wobei die Vorrichtung eine Vielzahl von Saugeinrichtungen (11) aufweist, die wenigstens zwei untereinander verbundenen Trägerelementen (3, 3A, 3B) zugeordnet sind, welche zwischen der Scheibe (1) und der Trägeroberfläche (2) angeordnet sind, wobei die Saugeinrichtungen (11) gegenüberliegenden Oberflächen (9, 10) jedes Elements (3, 3A, 3B) zugeordnet sind, um so mit der Scheibe (1) bzw. der Oberfläche (2) zusammenzuwirken, und Luftdurchgangsleitungen (15, 16, 20, 55, 56) aufweisen, die durch Ansaugen von Luft aus einem Element zu einem benachbarten folgenden Element durch an eine Öffnung (17, 18), an welcher sich wenigstens eine der Leitungen von einem der Elemente (3, 3A, 3B) nach außen öffnet, angelegten Unterdruck Luft aus allen Saugeinrichtungen (11) abführen, um sie an der Scheibe (1) und der Trägeroberfläche (2) festzuhalten, um diese so aneinander festzuspannen, dadurch gekennzeichnet, daß die Elemente (3, 3A, 3B) aufeinanderfolgend direkt miteinander verbunden sind, aber relativ zueinander beweglich sind, um so eine kettenartige, flexible Struktur zu bilden.

2. Vorrichtung nach Anspruch 1, gekennzeichnet durch Mittel (33, 61) zum mechanischen und pneumatischen Verbinden benachbarter aufeinanderfolgender Elemente (3, 3A, 3B) miteinander.

3. Vorrichtung nach Anspruch 1, gekennzeichnet durch wenigstens ein mit Kanälen (15, 16) versehenes Kopfelement (3A), welche Kanäle sich an einer Fläche (19) des Körpers (8) des Elements öffnen (bei 17, 18), wobei die Fläche diejenigen Flächen (9, 10) miteinander verbindet, denen die Saugeinrichtungen (11) zugeordnet sind, wobei die Kanäle (15, 16) über jeweilige Leitungen (20) mit den Saugeinrichtungen (11) und mit den Mitteln (33) zum Verbinden der aufeinanderfolgenden benachbarten Elemente verbunden sind, wobei das Kopfelement (3A) wenigstens mit einer üblichen Vakuumquelle verbunden ist.

4. Vorrichtung nach Anspruch 1, gekennzeichnet durch ein Endelement (3B) mit einem im wesentlichen C-förmigen Körper (8) mit übereinanderliegenden parallelen Armen (71, 72), in denen koaxiale Durchgangsöffnungen (70) vorgesehen sind, um sich zu den gegenüberliegenden Flächen (9, 10) entsprechend den daran vorhandenen Saugeinrichtungen (11) zu öffnen.

5. Vorrichtung nach den vorhergehenden Ansprüchen, dadurch gekennzeichnet, daß das dem Endelement (3B) vorangehende Element einen Körper (8) aufweist, der mit einem vorspringenden Teil (58), welches zwischen die parallelen Arme (71, 72) des Endelements (3B) einzusetzen ist, versehen ist, wobei das vorspringende Teil (58) eine Durchgangsöffnung aufweist, die koaxial zu den in den Armen vorgesehenen Öffnungen (70) zu positionieren ist, um so einen Sitz für die mechanischen und pneumatischen Verbindungsmittel (33, 61) zu bilden.

6. Vorrichtung nach Anspruch 2, dadurch gekennzeichnet, daß die mechanischen und pneumatischen Verbindungsmittel (33, 61) zwischen benachbarten aufeinanderfolgenden Elementen (3, 3A, 3B) wenigstens einen mit Leitungen (41, 43) versehenen Körper aufweisen, der dazu ausgelegt ist, die Leitungen (15, 16; 56, 57) des vorhergehenden Elements mit den Saugeinrichtungen (11) des nächsten Elements zu verbinden.

7. Vorrichtung nach Anspruch 6, dadurch gekennzeichnet, daß die Verbindungsmittel (33, 61) eine äußere Seitenfläche haben, die eine Mehrzahl von ringförmigen Ausnehmungen (39) aufweist, welche Dichtungselemente (40) aufnimmt.

8. Vorrichtung nach Anspruch 6, dadurch gekennzeichnet, daß die Verbindungsmittel (33, 61) erste Leitungen (41, 42) und zweite Leitungen (43, 44) aufweisen, die in einem Winkel zueinander angeordnet sind, wobei die zweiten Leitungen zur funktionsmäßigen Verbindung mit den Saugeinrichtungen (11) des nächsten Elements in der Lage sind und die ersten Leitungen sich zu der seitlichen Außenfläche der Mittel öffnen und zur Zusammenwirkung mit den Leitungen (15, 16; 56, 57) des vorhergehenden Elements in der Lage sind.

9. Vorrichtung nach Anspruch 3, dadurch gekennzeichnet, daß das Kopfelement (3A) ein vorspringendes Teil (30) aufweist, das zwischen die Arme (36) des nachfolgenden benachbarten Elements einzusetzen ist, wobei das Teil eine Durchgangsöffnung aufweist, um die Verbindungsmittel (33) aufzunehmen.

10. Vorrichtung nach Anspruch 3, dadurch gekennzeichnet, daß den Öffnungen (17, 18) der Kanäle (15, 16) des Kopfelements (3A) Glieder (27) zum Verbinden des Elements mit üblichen Schläuchen zugeordnet sind, die mit einer Vakuumquelle verbunden sind.

11. Vorrichtung nach Anspruch 1, 3 und 4, dadurch gekennzeichnet, daß zwischen dem Kopfelement (3A) und dem Endelement (3B) wenigstens ein mittleres Element (3) ist, das mit übereinanderliegenden parallelen Armen (36), die den Vorsprung (30) des Kopfelements (3A) aufnehmen, und mit einem vorspringenden Teil (58) versehen ist, welches zwischen den übereinanderliegenden parallelen Armen (71, 72) des Endelements aufzunehmen ist, wobei die Arme (36) und das vorspringende Teil (58) des mittleren Elements (3) Durchgangsöffnungen (35, 66) aufweisen, um die mechanischen und pneumatischen Verbindungsmittel (33, 61) aufzunehmen, wobei die in den Armen (36) vorhandenen Durchgangsöffnungen (35) sich entsprechend den Saugeinrichtungen (11) an den gegenüberliegenden Oberflächen (9, 10) des Körpers (8) des mittleren Elements öffnen.

12. Vorrichtung nach Anspruch 11, dadurch gekennzeichnet, daß in dem mittleren Element Leitungen (56, 57) vorgesehen sind, die über Kanäle (55) mit den Saugeinrichtungen (11) verbunden sind und sich in die in dem vorspringenden Teil (58) des Elements vorgesehen Durchgangsöffnung (60) öffnen.

13. Vorrichtung nach Anspruch 1 und 11, gekennzeichnet durch eine Mehrzahl von mittleren Elementen (3), die aufeinanderfolgend in Abfolge zwischen dem Kopfelement (3A) und dem Endelement (3B) angeordnet sind und die einander durch die mechanischen und pneumatischen Verbindungsmittel (33, 60) zugeordnet sind, wobei die Elemente (3A, 3A, 3B) eine Kette (4) bilden.

14. Vorrichtung nach Anspruch 1 oder 3, dadurch gekennzeichnet, daß jedes Element (3, 3A, 3B) der Abfolge von Elementen durch die mechanischen und pneumatischen Verbindungsmittel gelenkig mit dem nächsten Element verbunden ist.

## Revendications

1. Dispositif pour fixer et maintenir en place une plaque en verre formable pendant son traitement, ladite plaque étant placée sur une surface support et maintenue, de préférence, à distance de celle-ci pour permettre à l'outil de travail de se déplacer et d'agir sur elle, par exemple pour arrondir les bords, et comprenant un ensemble de ventouses (11) associées à au moins deux éléments supports (3, 3A, 3B) reliés entre eux et disposés entre la plaque (1) et la surface support (2), lesdites ventouses (11) étant associées aux faces opposées (9, 10) de chaque élément (3, 3A, 3B), de façon à coopérer respectivement avec la plaque (1) et la surface (2), et comprenant des conduits de passage d'air (15, 16, 20, 55, 56) qui, en aspirant ledit air d'un élément à l'élément adjacent suivant, sous l'effet d'une dépression appliquée à une ouverture (17, 18) à laquelle est raccordé au moins l'un desdits conduits débouchant à l'extérieur de l'un desdits éléments (3, 3A, 3B), extraient l'air de toutes les ventouses (11) pour les appliquer sur la plaque (1) et sur la surface support (2), en immobilisant celles-ci l'une par rapport à l'autre, caractérisé en ce que lesdits éléments (3, 3A, 3B) sont assemblés directement à la suite les uns des autres, tout en étant mobiles les uns par rapport aux autres, en formant une structure flexible analogue à une chaîne.

2. Dispositif selon la revendication 1, caractérisé en ce qu'il comprend des moyens (33, 61) permettant le raccordement mutuel, mécanique et pneumatique, des éléments adjacents successifs (3, 3A, 3B).

3. Dispositif selon la revendication 1, caractérisé en ce qu'il comprend au moins un élément de tête (3A) comportant des canaux (15, 16) débouchant (en 17, 18) sur l'une des faces (19) du corps (8) dudit élément, ladite face reliant ensemble les faces (9, 10) auxquelles sont associées les ventouses (11), lesdits canaux (15, 16) étant reliés, par des conduits correspondants (20), aux ventouses (11) et au moyen (33) assurant l'assemblage avec l'élément adjacent suivant, ledit élément de tête (3A) étant relié à au moins un appareil générateur de dépression classique.

4. Dispositif selon la revendication 1, caractérisé en ce qu'il comprend un élément terminal (3B) dont le corps (8) a essentiellement la forme d'un C, comportant des bras parallèles superposés (71, 72) dans lesquels sont prévus des trous de passage (70) coaxiaux débouchant dans les faces opposées (9, 10), en correspondance avec les ventouses (11) que celles-ci comportent.

5. Dispositif selon les revendications précédentes, caractérisé en ce que le corps (8) de l'élément précédant l'élément terminal (3B) comporte une partie en prolongement (58) prévue pour s'insérer entre les bras parallèles (71, 72) de l'élément terminal (3B), ladite partie en prolongement (58) comportant un trou de passage (60) prévu pour être positionné dans l'axe des trous (70) ménagés dans lesdits bras de façon à définir un logement pour le moyen de raccordement mécanique et pneumatique (33, 61).

6. Dispositif selon la revendication 2, caractérisé en ce que le moyen de raccordement mécanique et pneumatique (33, 61) de deux éléments adjacents successifs (3, 3A, 3B) comprend au moins un corps comportant des conduits (41, 43) disposés de façon à raccorder les conduits (15, 16 ; 56, 57) de l'élément précédent aux ventouses (11) de l'élément suivant.

7. Dispositif selon la revendication 6, caractérisé en ce que le moyen de raccordement (33, 61) comporte, sur sa surface latérale extérieure, plusieurs gorges annulaires (39) servant de logement à des éléments d'étanchéité (40).

8. Dispositif selon la revendication 6, caractérisé en ce que le moyen de raccordement (33, 61) comporte un premier jeu de conduits (41, 42) et un second jeu de conduits (43, 44), ces jeux étant disposés à angle droit l'un par rapport à l'autre, le second jeu de conduits pouvant être relié en fonctionnement aux ventouses (11) de l'élément suivant, le premier jeu de conduits débouchant dans la surface latérale extérieure dudit moyen et étant susceptible de coopérer avec les conduits (15, 16 ; 56, 57) de l'élément précédent.

9. Dispositif selon la revendication 3, caractérisé en ce que l'élément de tête (3A) comporte une partie en prolongement (30) prévue pour s'insérer entre les bras (36) de l'élément adjacent suivant, ladite partie comportant un trou de passage prévu pour recevoir le moyen de raccordement (33).

10. Dispositif selon la revendication 3, caractérisé en ce qu'aux ouvertures (17, 18) des canaux (15, 16) de l'élément de tête (3A) sont associés des éléments (27) permettant de raccorder audit élément de tête des tuyaux ordinaires reliés à l'appareil générateur de dépression.

11. Dispositif selon les revendications 1, 3 et 4, caractérisé en ce que, entre l'élément de tête (3A) et l'élément terminal (3B) se trouve au moins un élément intermédiaire (3) comportant des bras parallèles superposés (36) prévus pour recevoir le prolongement (30) de l'élément de tête (3A), ainsi qu'une partie en prolongement (58) prévue pour s'insérer entre les bras parallèles superposés (71, 72) de l'élément terminal, lesdits bras (36) et ladite partie en prolongement (58) de l'élément intermédiaire (3) comportant des trous de passage (35, 66) prévus pour recevoir le moyen de raccordement mécanique et pneumatique (33, 61), les trous (35) ménagés dans lesdits bras (36) débouchant en correspondance avec les ventouses (11) dans les faces opposées (9, 10) du corps (8) dudit élément intermédiaire.

12. Dispositif selon la revendication 11, caractérisé en ce que l'élément intermédiaire comporte des conduits (56, 57) reliés par des canaux (55) aux ventouses (11) et débouchant dans le trou de passage (60) prévu dans la partie en prolongement (58) dudit élément.

13. Dispositif selon les revendications 1 et 11, caractérisé en ce qu'il comprend un ensemble d'éléments intermédiaires (3) disposés à la suite les uns des autres entre l'élément de tête (3A) et l'élément terminal (3B), et reliés les uns aux autres par les moyens de raccordement mécanique et pneumatique (33, 61), lesdits éléments (3, 3A, 3B) définissant une chaîne (4).

14. Dispositif selon l'une ou l'autre des revendications 1 et 13, caractérisé en ce que chacun desdits éléments (3, 3A, 3B) de la chaîne d'éléments est articulé sur l'élément suivant par le moyen de raccordement mécanique et pneumatique.
